# EUROPEAN PATENT APPLICATION

(11) **EP 2 884 684 A1**
(43) Date of publication of application: **17.06.2015**
(21) Application number: 13197226.7
(22) Date of filing: 13.12.2013
(51) Int. Cl.: H04L 1/06, H04L 5/00, H04L 27/26

(54) **Method of wirelessly transmitting data according to a specific telegram packing and communication system**

(71) Applicant: Siemens Aktiengesellschaft, 80333 München (DE)
(72) Inventor: Hulbert, Anthony Peter, Bassett Green, Southampton, Hampshire SO16 3DF (GB)

(57) **Abstract**

The efficiency of data transmission specifically for industrial control systems shall be improved. Therefore, a method is provided which includes a transmission telegram characterized by operation of the transmitter and the receiver in a TDD mode, a first packet (P1') having two OFDM data-only symbols (DS1, DS2) and one OFDM pilot-only symbol (PS), a second packet (P2') having two OFDM data-only symbols (DS3, DS4) but no OFDM pilot-only symbol, interleaving in the frequency domain and implementation of twin antenna space time diversity for transmission.

## Description

The present invention relates to a method of wirelessly transmitting data preferably in an industrial control system from a transmitter to a receiver according to a transmission telegram. Furthermore, the present invention relates to a communication system for an industrial control system including a receiver and a transmitter for wirelessly transmitting data to the receiver according to such transmission telegram.

Wireless radio communication links have typically been designed for applications in which modest latency is not of significant concern. However, some applications require extremely low latency that is also non varying. One such application is wireless industrial control. Here, the reliability requirement is extremely high: Typically, requirements for mean time between message transmission failure run to days or even weeks. Moreover, the bandwidth efficiency requirement is also high: typically, > 2 bps/Hz. In addition to the above, highly reliable links are required in both directions.

Prior solutions have addressed the reliability requirement using a combination of Forward Error Correction (FEC) and Automatic Repeat reQuest (ARQ) and antenna diversity. However, ARQ cannot support non varying time delays. No existing solutions come close to providing the necessary performance. Latency is also compromised in many existing solutions by the inclusion of unique words for synchronisation.

The article Alamouti, M., "A Simple Transmit Diversity Technique for Wireless Communications", IEEE Journal on Select Areas in Communications, Vol. 16, No. 8, October 1998, pp. 1451-1458, presents a simple two-branch transmit diversity scheme. Using two transmit antennas and one receive antenna, the scheme provides the same diversity order as maximal-ratio receiver combining (MRRC) with one transmit antenna, and two receive antennas. It is also shown that the scheme may easily be generalized to two transmit antennas and M receive antennas to provide a diversity order of 2M.

Wireless industrial control is required to communicate a number of different duration telegrams between a wireless master and a wireless slave. Some of these telegrams include a large payload, others a small payload. Where the payload is small, it may not be large enough to use the available capacity of a minimum duration air interface packet. This results in a significant inefficiency of operation. In some circumstances it can increase the aggregate duration of transmission beyond the point that can be contained within a control cycle period.

Up to now, some wireless control topologies cannot be supported. This disadvantage can be mitigated by designing a wireless interface with higher spectral efficiency. For example, larger constellation sizes for modulation can be used. However, this will adversely affect the available operating range.

In view of that, it is the object of the present invention to provide a method of wirelessly transmitting data with higher efficiency.

According to the present invention, this object is solved by a method of wirelessly transmitting data preferably in an industrial control system from a transmitter to a receiver according to a telegram for transmission being characterized by operation of the transmitter and the receiver in a TDD mode, a first packet having two OFDM data-only symbols and one OFDM pilot-only symbol, a second packet having two OFDM data-only symbols but no OFDM pilot-only symbol, interleaving in the frequency domain, the duration of the OFDM pilot-only symbol being optionally reduced compared to the duration of each OFDM data-only symbol, and implementation of twin antenna space time diversity for transmission.

Furthermore, there is provided a communication system for an industrial control system including a receiver and a transmitter for wirelessly transmitting data to the receiver according to a telegram for transmission, the telegram being characterized by operation of the transmitter and the receiver in a TDD mode, a first packet having two OFDM data-only symbols and one OFDM pilot-only symbol, a second packet having two OFDM data-only symbols but no OFDM pilot-only symbol, interleaving in the frequency domain, the duration of the OFDM pilot-only symbol being optionally reduced compared to the duration of each OFDM data-only symbol and implementation of twin antenna space time diversity for transmission.

The advantage of the present invention is that the telegram for transmission enables an increased payload since the percentage of the OFDM data-only symbols in the packet pair is higher than in known packet pairs, where OFDM pilot-only symbols are established in each data packet. Thus, the single OFDM pilot-only symbol is used for estimating the transmission channel for both packets.

Preferably, the twin antenna space time diversity is twin antenna Alamouti space time diversity. Thus, the transmission scheme is based on the Alamouti method described in the paper which is mentioned in the introductory part of the present document. The Alamouti space time diversity guarantees high reliability of transmission.

The transmitter may be part of a first transceiver and the receiver may be part of a second transceiver, and both transceivers may have at least two antennas each and may be operated in the TDD mode. This means that antenna diversity may be used for transmission as well as for reception, i.e. in both directions.

In a specific embodiment, the duration of the OFDM pilot-only symbol is reduced, compared to a duration of each OFDM data-only symbol. Thus, the time duration of a pilot-only symbol for estimating the channel quality for transmission is kept short.

Additionally, the two OFDM data-only symbols of the first packet may be arranged immediately behind each other, the two OFDM data-only symbols of the second packet may be arranged immediately behind each other and the OFDM pilot-only symbol may be arranged between the two OFDM data-only symbol pairs. Thus, the first packet can be decoded after the same time as a usual data-pilot-data packet, whereas the second packet can be decoded already after reception of its two data-only symbols. Thus, decoding of the first packet can be started clearly before the end of transmission of the packet pair.

According to a further improvement, each symbol may be transmitted by a plurality of sub-carriers which are interleaved in the frequency domain, and the modulation of the sub-carriers is 64 QAM. Such interleaving and modulation leads to high bandwidth efficiency.

Each OFDM symbol may include a cyclic prefix component. Such prefix component has the advantage that neighbouring symbols can be isolated simply.

Moreover, a part of each OFDM pilot-only symbol excluding a cyclic prefix may be half as long as a data part of each OFDM data-only symbol. Consequently, the data payload is increased with respect to usual packets where pilot-only symbols have the same length as data-only symbols.

The above features develop the inventive method further as well as the inventive communication systems.

The present invention will be explained in further detail in connection with the attached drawings, showing in
- FIG 1: a transmission telegram of a packet pair with two pilot symbols and
- FIG 2: a transmission telegram of a packet pair with shared pilot symbol.

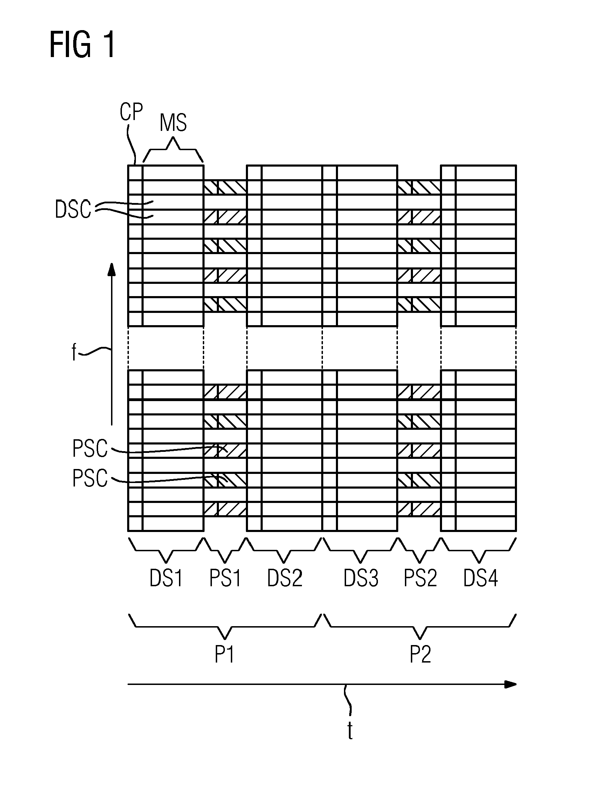

The following embodiments show preferred examples of the present invention. However, the example of FIG 1 is not claimed here.

The embodiments are preferably based on a highly optimised bespoke waveform that combines physical layer components in unusual ways. The need for the latency/throughput overhead associated with a unique word may be removed through the use of a deterministic MAC (Medium Access Control) which implements Time Division Duplex (TDD).

The minimal air (i.e. wireless) interface telegram consists of a pair of OFDM symbols (Orthogonal Frequency-Division Multiplexing), transmitted using two antenna Alamouti space-time transmit diversity (see above-mentioned prior art document) and coherent receiver two antenna diversity, providing overall fourfold antenna diversity. As the direction of transmission is reversed according to the operation of TDD, the roles of the antennas are also reversed.

For the purposes of the industrial control, a single telegram delivery failure in one direction is sufficient to break the feedback control loop. When such failures occur, then for a fixed failure rate in either direction, it is better if the failures in opposite directions tend to happen at the same time since this roughly halves the average link failure rate. Due to reciprocity, multipath fading over the four radio paths is identical in both directions. Thus, any fading condition severe enough to cause a link failure in one direction is likely to cause it in the other direction. Thus, the use of TDD (as opposed, for example, to Frequency Division Duplex - FDD - in which the fading conditions in opposite directions are uncorrelated) is advantageous for wireless industrial control.

The signals transmitted between a transmitter and a receiver comply with a predefined signal telegram. Such telegram leads to a specific waveform. The structure of a basic waveform used in the present embodiment is illustrated in FIG 1. The diagram shows a first packet P1 including a data-only symbol DS1, a pilot-only symbol PS1 and a data-only symbol DS2. A second packet P2 is immediately following the first packet P1, so that the two packets P1 and P2 form a packet pair. The structure of the second packet P2 is similar to that of the first packet, i.e. a first data-only symbol DS3 is immediately followed by a pilot-only symbol PS2 and a second data-only symbol DS4. Thus, the six symbols DS1, PS1, DS2, DS3, PS2 and DS4 are arranged in time t immediately one after another.

All symbols are transmitted in sub-carriers. The sub-carriers are spread over the frequency f, i.e. each symbol is transmitted with a plurality of frequencies, each characterizing one sub-carrier.

Each symbol DS1, PS1, DS2, DS3, PS2, DS4 comprises a plurality of symbol parts. According to the specific telegram, each symbol part is transmitted by one of a data sub-carrier DSC or a pilot sub-carrier PSC, respectively. The data sub-carriers DSC carry a part of the data of the corresponding symbol and the pilot sub-carriers PSC each carry a part of a pilot signal for measuring the response of the corresponding transmission path. In brief, we say: A symbol consists of a plurality of sub-carriers.

The diagram of FIG 1 is compressed in frequency for clarity (the centre frequency sub-carriers are not shown). As is conventional for OFDM, the OFDM symbols are prefaced by a cyclic prefix CP, which is a repetition of the last part of the main OFDM symbol MS. In the present example, this is true for data-only symbols as well as pilot-only symbols. The purpose of this is to isolate each symbol from its neighbour(s), i.e. to remove any overlap of the main OFDM symbols that might be caused by multipath propagation.

Each corresponding pair of OFDM symbol data sub-carriers DSC (i.e. each pair consisting of a sub-carrier in both data-only symbols has the same frequency, respectively) is encoded individually using Alamouti space time diversity as described in the document mentioned in the introductory part of the description. Specifically, the transmission matrix of table 1 on page 1454 is used. For instance, a symbol part of symbol DS1 is transmitted with a first antenna and the corresponding symbol part of symbol DS2 assigned to a sub-carrier having the same frequency is transmitted via a second antenna.

For the purposes of wireless industrial control, the physical layer may include the following elements or any sub-group of them:
- at least two transceivers operating in TDD mode,
- the use of OFDM symbols in pairs for space time coding without any additional pilot-only symbols,
- the inclusion of OFDM pilot sub-carriers at substantially regular intervals in at least one pair of the OFDM symbols in such a way as to sound the paths separately from both transmitter antennas,
- the use of interleaving in the frequency domain,
- the use of FED encoding in the transmitter,
- the implementation of twin antenna Alamouti space time diversity in the transmitting end,
- the use of, at least, twin antenna diversity in the receiver,
- TDD switching in the transceivers such that the two antennas used by the transmitter when in transmit mode are used by the receiver when in receive mode.

In a preferred embodiment, the modulation on the sub-carriers is 64 QAM providing high bandwidth efficiency transmission of data in both directions over the air interface. The FEC may be implemented, for example, using a convolutional code. Al-though better error performance can be achieved by using a modern code such as a Turbo code (and use of such a code is not excluded), the requirements of low latency operation constrain the processing time available for decoding the FEC code in the receiver. Use of a simpler code is beneficial in this regard.

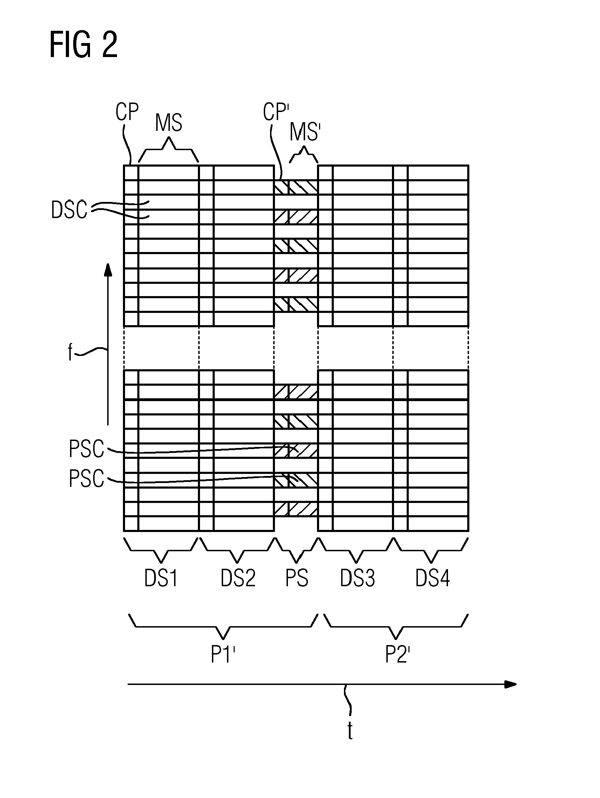

According to an embodiment of the present invention shown in FIG 2, the same data-only symbols DS1, DS2, DS3 and DS4 are transmitted in the transmission telegram. However, only one single pilot-only symbol PS is used for both pairs of data-only symbols DS1, DS2 and DS3, DS4. Thus, the transmission telegram of FIG 2 includes a first packet P1' immediately followed by a second packet P2'. The first packet P1' starts with the first data-only symbol DS1 immediately followed by data-only symbol DS2 and immediately followed by pilot-only symbol PS. In contrast to that, the second packet P2' only consists of its first data-only symbol DS3 immediately followed by data-only symbol DS4. Another arrangement of the symbols DS1, DS2, DS3, DS4 and PS may be advantageous, too.

In the frequency domain, each symbol is interleaved by using a plurality of sub-carriers. The pilot-only symbol PS does not use all sub-carriers available for data-only symbols. The main part MS' of each pilot sub-carrier is half as long as a main part MS of each data sub-carrier. The cyclic prefix component CP' of each pilot sub-carrier PSC has the same duration as a cyclic prefix component CP of a data sub-carrier DSC.

The proposed solution, where applicable, is to allow the MAC layer to pack more than one data telegram into one air interface packet. This is most appropriate where at least one of the telegrams is very small. Packing of telegrams may be performed in either of two ways:
- Full packing - in this approach the bits of two telegrams are concatenated and a single air interface packet of minimum duration constructed. This is usually the most efficient form of packing. However, it has the disadvantage that the transmission of both telegrams must wait until data is available from the later of the two. Moreover, it is not possible to obtain demodulated data from the first telegram until the whole of the air interface has been received (this solution is not claimed here).
- Shared synchronisation - this type of packing is claimed here and is described in connection with above FIG 2. Such packing is appropriate where waiting for the second of two telegrams either for transmission or for demodulation would introduce unacceptable delay. It should only be applied to relatively short telegrams, where the duration of both would require transmission of separate synchronisation symbols (pilot symbols).

By the re-ordering of the OFDM symbols a single sync symbol (pilot symbol) can serve for both packets P1' and P2', thereby saving transmission time. As a result, the first packet P1' is available after the same delay as packet P1 of FIG 1, whilst the second packet P2' is available after a reduced delay compared to the example of FIG 1. Thus, the advantage of the telegram packing according to the present invention is improved transmission efficiency, potentially allowing additional traffic within a wireless industrial control cycle.

## Claims

1. Method of wirelessly transmitting data preferably in an industrial control system from a transmitter to a receiver according to a telegram for transmission being **characterized by**
- operation of the transmitter and the receiver in a TDD mode,
- a first packet (P1') having two OFDM data-only symbols (DS1, DS2, DS3, DS4) and one OFDM pilot-only symbol (PS, PS1, PS2),
- a second packet (P2') having two OFDM data-only symbols (DS1, DS2, DS3, DS4) but no OFDM pilot-only symbol,
- interleaving in the frequency domain,
- implementation of twin antenna space time diversity for transmission.

2. Method according to claim 1, wherein the twin antenna space time diversity is twin antenna Alamouti space time diversity.

3. Method according to claim 1 or 2, wherein the transmitter is part of a first transceiver and the receiver is part of a second transceiver, and both transceivers are operated in the TDD mode and have at least two antennas each.

4. Method according to one of the preceding claims, wherein a duration of the OFDM pilot-only symbol (PS, PS1, PS2) is reduced compared to a duration of each OFDM data-only symbol (DS1, DS2, DS3, DS4).

5. Method according to one of the preceding claims, wherein a part of each OFDM pilot-only symbol (PS, PS1, PS2) excluding a cyclic prefix is half as long as a data part of each OFDM data-only symbol (DS1, DS2, DS3, DS4).

6. Method according to one of the preceding claims, wherein each symbol (PS, PS1, PS2; DS1, DS2, DS3, DS4) is transmitted by a plurality of sub-carriers (PSC, DSC) which are interleaved in the frequency domain, and the modulation of the sub-carriers (PSC, DSC) is 64 QAM.

7. Method according to one of the preceding claims, wherein each OFDM symbol (PS, PS1, PS2; DS1, DS2, DS3, DS4) includes a cyclic prefix component (CP, CP').

8. Method according to one of the preceding claims, wherein the two OFDM data-only symbols (DS1, DS2) of the first packet (P1') are arranged immediately behind each other, the two OFDM data-only symbols (DS3, DS4) of the second packet (P2') are arranged immediately behind each other and the OFDM pilot-only symbol (PS) is arranged between the two OFDM data-only symbol pairs (DS1, DS2; DS3, DS4).

9. Communication system for an industrial control system including:
- a receiver and
- a transmitter for wirelessly transmitting data to the receiver according to a telegram for transmission, the telegram being **characterized by**
■ operation of the transmitter and the receiver in a TDD mode,
■ a first packet (P1') having two OFDM data-only symbols (DS1, DS2, DS3, DS4) and one OFDM pilot-only symbol (PS),
■ a second packet (P2') having two OFDM data-only symbols (DS1, DS2, DS3, DS4) but no OFDM pilot-only symbol,
■ interleaving in the frequency domain,
■ implementation of twin antenna space time diversity for transmission.

## Amended claims

### Amended claims in accordance with Rule 137(2) EPC.

**1.** Method of wirelessly transmitting data preferably in an industrial control system from a transmitter to a receiver according to a telegram for transmission being **characterized by**
- operation of the transmitter and the receiver in a TDD mode,
- a first packet (P1') having two OFDM data-only symbols (DS1, DS2) and one OFDM pilot-only symbol (PS),
- a second packet (P2') having two OFDM data-only symbols (DS3, DS4) but no OFDM pilot-only symbol,
- interleaving in the frequency domain,
- implementation of twin antenna space time diversity for transmission.

**2.** Method according to claim 1, wherein the twin antenna space time diversity is twin antenna Alamouti space time diversity.

**3.** Method according to claim 1 or 2, wherein the transmitter is part of a first transceiver and the receiver is part of a second transceiver, and both transceivers are operated in the TDD mode and have at least two antennas each.

**4.** Method according to one of the preceding claims, wherein a duration of the OFDM pilot-only symbol (PS, PS1, PS2) is reduced compared to a duration of each OFDM data-only symbol (DS1, DS2, DS3, DS4).

**5.** Method according to one of the preceding claims, wherein a part of each OFDM pilot-only symbol (PS, PS1, PS2) excluding a cyclic prefix is half as long as a data part of each OFDM data-only symbol (DS1, DS2, DS3, DS4).

**6.** Method according to one of the preceding claims, wherein each symbol (PS, PS1, PS2; DS1, DS2, DS3, DS4) is transmitted by a plurality of sub-carriers (PSC, DSC) which are interleaved in the frequency domain, and the modulation of the sub-carriers (PSC, DSC) is 64 QAM.

**7.** Method according to one of the preceding claims, wherein each OFDM symbol (PS, PS1, PS2; DS1, DS2, DS3, DS4) includes a cyclic prefix component (CP, CP').

**8.** Method according to one of the preceding claims, wherein the two OFDM data-only symbols (DS1, DS2) of the first packet (P1') are arranged immediately behind each other, the two OFDM data-only symbols (DS3, DS4) of the second packet (P2') are arranged immediately behind each other and the OFDM pilot-only symbol (PS) is arranged between the two OFDM data-only symbol pairs (DS1, DS2; DS3, DS4).

**9.** Communication system for an industrial control system including:
- a receiver and
- a transmitter for wirelessly transmitting data to the receiver according to a telegram for transmission, the telegram being **characterized by**
▪ operation of the transmitter and the receiver in a TDD mode,
▪ a first packet (P1') having two OFDM data-only symbols (DS1, DS2) and one OFDM pilot-only symbol (PS),
▪ a second packet (P2') having two OFDM data-only symbols (DS3, DS4) but no OFDM pilot-only symbol,
▪ interleaving in the frequency domain,
implementation of twin antenna space time diversity for transmission.

**1.** Method of wirelessly transmitting data preferably in an industrial control system from a transmitter to a receiver according to a telegram for transmission being **characterized by**
- operation of the transmitter and the receiver in a TDD mode,
- a first packet (P1') having two OFDM data-only symbols (DS1, DS2) and one OFDM pilot-only symbol (PS), wherein the two OFDM data-only symbols (DS1, DS2) of the first packet (P1') are arranged immediately behind each other,
- a second packet (P2') having two OFDM data-only symbols (DS3, DS4) but no OFDM pilot-only symbol, wherein the two OFDM data-only symbols (DS3, DS4) of the second packet (P2') are arranged immediately behind each other and wherein the OFDM pilot-only symbol (PS) is arranged between the two OFDM data-only symbol pairs (DS1, DS2; DS3, DS4),
- interleaving in the frequency domain,
- implementation of twin antenna space time diversity for transmission.

**2.** Method according to claim 1, wherein the twin antenna space time diversity is twin antenna Alamouti space time diversity.

**3.** Method according to claim 1 or 2, wherein the transmitter is part of a first transceiver and the receiver is part of a second transceiver, and both transceivers are operated in the TDD mode and have at least two antennas each.

**4.** Method according to one of the preceding claims, wherein a duration of the OFDM pilot-only symbol (PS, PS1, PS2) is reduced compared to a duration of each OFDM data-only symbol (DS1, DS2, DS3, DS4).

**5.** Method according to one of the preceding claims, wherein a part of each OFDM pilot-only symbol (PS, PS1, PS2) excluding a cyclic prefix is half as long as a data part of each OFDM data-only symbol (DS1, DS2, DS3, DS4).

**6.** Method according to one of the preceding claims, wherein each symbol (PS, PS1, PS2; DS1, DS2, DS3, DS4) is transmitted by a plurality of sub-carriers (PSC, DSC) which are interleaved in the frequency domain, and the modulation of the sub-carriers (PSC, DSC) is 64 QAM.

**7.** Method according to one of the preceding claims, wherein each OFDM symbol (PS, PS1, PS2; DS1, DS2, DS3, DS4) includes a cyclic prefix component (CP, CP').

**8.** Communication system for an industrial control system including:
- a receiver and
- a transmitter for wirelessly transmitting data to the receiver according to a telegram for transmission, the telegram being **characterized by**
▪ operation of the transmitter and the receiver in a TDD mode,
▪ a first packet (P1') having two OFDM data-only symbols (DS1, DS2) and one OFDM pilot-only symbol (PS), wherein the two OFDM data-only symbols (DS1, DS2) of the first packet (P1') are arranged immediately behind each other,
▪ a second packet (P2') having two OFDM data-only symbols (DS3, DS4) but no OFDM pilot-only symbol, wherein the two OFDM data-only symbols (DS3, DS4) of the second packet (P2') are arranged immediately behind each other and wherein the OFDM pilot-only symbol (PS) is arranged between the two OFDM data-only symbol pairs (DS1, DS2; DS3, DS4),
▪ interleaving in the frequency domain,
implementation of twin antenna space time diversity for transmission
